# EUROPEAN PATENT APPLICATION

(11) **EP 4 239 169 A1**
(43) Date of publication of application: **06.09.2023**
(21) Application number: 22160106.5
(22) Date of filing: 03.03.2022
(51) Int. Cl.: F01N 3/28

(54) **MIXING TUBES AND EXHAUST AFTERTREATMENT SYSTEMS WITH IMPROVED UREA WATER SOLUTION MIXING PROPERTIES**

(71) Applicant: Donaldson Company, Inc., Bloomington, MN 55431 (US)
(72) Inventor: DE RUDDER, Korneel, MN 55440-1200 (US); SCHELLENS, Bart, MN 55440-1200 (US); SILVA, Francisco, MN 55440-1299 (US); FOLLON, Bavo, MN 55440-1299 (US); CHAUVIN, Corine, MN 55440-1299 (US); AGAR, Anil, MN 55440-1299 (US); MADDINENI, Ajay, MN 55440-1299 (US); PANDEY, Rangesh, MN 55440-1299 (US)
(74) Representative: IPLodge bv

(57) **Abstract**

A mixing tube for an exhaust treatment assembly, the mixing tube extending along a tube axis and having a first end and a second end; the mixing tube comprising a first longitudinal tube portion at the first end and a second longitudinal tube portion in between the first longitudinal tube portion and the second end; wherein the first longitudinal portion comprises a first set of regularly spaced openings for allowing an exhaust flow to enter the mixing tube and wherein the first longitudinal tube portion and the second longitudinal tube portion are separated from one another by a flow guide component arranged within the mixing tube such as to separate an injection area from a mixing area in the mixing tube; and exhaust treatment assembly comprising the mixing tube.

## Description

### Background

Vehicles equipped with diesel engines typically include exhaust systems that have aftertreatment systems such as selective catalytic reduction catalyst devices, lean NOx catalyst devices, or lean NOx trap devices to reduce the amount of undesirable gases, such as nitrogen oxides (NOx) from the exhaust. In order for these types of aftertreatment devices to work properly, a doser injects reactants, such as urea, ammonia, or hydrocarbons, into the exhaust gas. As the exhaust gas and reactants flow through the aftertreatment device, the exhaust gas and reactants convert the undesirable gases, such as NOx, into more acceptable gases, such as nitrogen and oxygen. The efficiency of the aftertreatment system depends at least partially upon how evenly the reactants are mixed with the exhaust gases.

A problem with such catalyst device based systems is that reactant (e.g., urea) and reactant-by-product (e.g., cyanuric acid, biuret, melamine, ammelide, and ammeline) deposits can be formed within the exhaust system when decomposition of the injected reactant is incomplete. First, the deposited reactant does not mix with the exhaust, thereby lowering the efficiency of the system. Second, the deposit buildup may eventually clog the system, inhibiting or preventing exhaust flow from reaching the catalyst device.

A mixing tube and associated exhaust aftertreatment system has for instance been described in WO2021050157A1. Rigorous modelling and experimentation showed that with the prior art mixer disclosed in Fig. 22 of WO2021050157A1 (copied as Fig. 1 in the present application) an already significant reduction of deposit formation can be achieved by providing the described configuration of perforations 360 and louvers 322, but that such a configuration can result in a reduced mixing ability, which in turn reduces the efficiency of use of the SCR catalyst.

Improvements are desired.

### Summary

It is a first object of the present disclosure to provide a mixing tube for an exhaust treatment assembly, the mixing tube extending along a tube axis and having a first end and a second end. According to preferred embodiments, the tube has a constant, for instance circular, cross-section. The mixing tube preferably has a cylindrical envelope and has a representative cross-section area "A" perpendicular to the tube axis. The mixing tube comprises a first longitudinal tube portion at the first end and a second longitudinal tube portion in between the first longitudinal tube portion and the second end; wherein the first longitudinal tube portion comprises a first set of regularly spaced openings for allowing an exhaust flow to enter the mixing tube and wherein the first longitudinal tube portion and the second longitudinal tube portion are separated from one another by a flow guide component arranged within the mixing tube such as to separate an injection area from a mixing area in the mixing tube. Typically, the injection area is upstream of the mixing area.

The presence of the flow guide component reduces deposits and provides improved mixing of urea water solution with the exhaust gas flow by guiding the flow in a predetermined manner and avoiding or dampening any large scale turbulence in the mixing tube near the point of urea water solution injection (in other words near the urea water solution injector).

It is an advantage of the presence of the flow guide component that mixing capability is improved by a collecting motion of the exhaust flow towards the tube axis.

According to preferred embodiments, the first set of regularly spaced openings forms a circumferential band or ribbon around the mixing tube, in a direction perpendicular on the axis of the mixing tube. The openings of the first set of regularly spaced openings are preferably distributed evenly, for instance in a matrix-type configuration. For the purpose to the present description the expression "distributed in a matrix-type configuration" refers to two-dimensional (2D) configurations (typically rolled up, along the surface of the mixing tube) with openings positioned at respective regular, preferably constant, distances in each of the two orthogonal dimensions (e.g. a first constant distance in columns and a second constant distance in rows). Thereby, openings in two adjacent columns or in two adjacent rows do not have to be aligned with respect to the tube axis or a direction perpendicular to the tube axis respectively . The openings can have different shapes such as circular, elliptical, obround, rectangular or square, but are preferably circular in cross-section. Preferably, the openings have a diameter of less than 4mm, or less than 3mm, or less than 2 mm, or less than 1 mm.

According to preferred embodiments, the density of the openings of the first set of openings within the area that they define, e.g. within a band or ribbon, is within the range of 25% to 40%, more preferably within 30% to 36%. According to preferred embodiments, the opening density is about 1/3 or about 33%.

According to preferred embodiments, the relative open area of the openings of the first set of openings is within the range of 6% to 26%, more preferably within the range of 11% to 21%, of the cross-section area A. According to preferred embodiments, the relative open area is about 16%.

According to preferred embodiments, the mixing tube has a wall thickness larger than 1 mm, or larger than 2 mm.

According to preferred embodiments, the flow guide component comprises a conically shaped surface defining a central opening, the conically shaped surface adapted and arranged for guiding an exhaust flow towards and through the central opening.

According to preferred embodiments, the flow guide component has a rotational symmetry along an axis, and wherein the flow guide component is arranged such that the flow guide component's axis and the mixing tube axis coincide.

According to preferred embodiments, a radial cross-section of the flow guide component comprises a first (substantially) straight section forming a first angle α with a plane perpendicular to the flow guide axis, a different second (substantially) straight section forming a second angle β with the plane perpendicular to the flow guide axis, and a, preferably curved, connection section connecting the first straight section and the second straight section. The first straight section is preferably arranged in between the internal sidewall of the mixing tube and the connection section, while the second straight section is preferably arranged in between the connection section and the central opening. The first angle α is preferably within the range of 10° to 50°, more preferably within the range of 15° to 45°. The second angle β is preferably within the range of 45° to 90°, more preferably within the range of 50° to 89°.

According to preferred embodiments, the central opening of the flow guide component has a surface size which is within the range of 0.25 to 0.50, preferably within the range of 0.32 to 0.42, of cross-section area A.

According to preferred embodiments, the flow guide component comprises a set of, preferably regularly spaced, cone openings in the conically shaped surface (different from the central opening), to thereby provide a first and a second flow path for the exhaust flow entering the mixing tube through the first set of openings, a first flow path going through the central opening and second flow path going through the set of , preferably regularly spaced, cone openings.

The presence of a set of , preferably regularly spaced, cone openings in the conically shaped surface of the flow guide component provides the advantage that it reduces any liquid deposit that may form on the flow guide component, and that it provides an increased probability of re-evaporation of any formed deposits by the increased surface area. Exhaust gas flow entering the flow guide component through the set of cone openings causes the droplets originating from the injector which would otherwise be impinging on the flow guide component to move towards the central axis. The cone openings also provide the creation a specific flow suitable for stripping and/or evaporating any deposited droplets or particles forming a liquid film on the inner sidewall of the flow guide component (or conically shaped surface, for instance the inner surface of the inner annular portion as defined further on) .

The presence of a set of , preferably regularly spaced, cone openings in the conically shaped surface of the flow guide component also provides an additional reduction of turbulence level of the exhaust gas flow.

According to preferred embodiments, the set of, preferably regularly spaced, cone openings is arranged in a circumferential band or ribbon provided around and perpendicular to the symmetry axis of the flow guide component.

The cone openings of the set of, preferably regularly spaced, cone openings are preferably distributed evenly, for instance in a matrix-type configuration. The openings can have different shapes, such as circular, elliptical, obround, rectangular or square, but are preferably circular in cross-section. Preferably, the openings have a diameter of less than 4mm, or less than 3mm, or less than 2 mm, or less than 1 mm.

According to preferred embodiments, the density of the openings of the set of cone openings within the area that they define, e.g. within a band or ribbon, is within the range of 25% to 40%, more preferably within 30% to 36%. According to preferred embodiments, the opening density is about 1/3 or about 33%.

According to preferred embodiments, the relative open area of the set of cone openings (i.e. excluding the central opening) is within the range of 12% to 32%, more preferably within the range of 15% to 29%, of the cross-section area A. According to preferred embodiments, the relative open area of the set of cone openings is about 22% of cross-section area A.

According to preferred embodiments, the flow guide component, or the conical surface, such as for instance the first straight section, connection section and second straight section, have a wall thickness larger than 1 mm, or larger than 2 mm.

According to preferred embodiments, the conically shaped surface extends from the central opening to an inner sidewall of the mixing tube, and extends in a direction towards the first end of the mixing tube when following the surface from the inner sidewall radially towards the central opening.

According to preferred embodiments, the conically shaped surface extends from the central opening to an inner sidewall of the mixing tube, and extends in a direction away from the first end of the mixing tube when following the surface from the inner sidewall radially towards the central opening.

According to preferred embodiments, the first longitudinal tube portion further comprises a first set of louvers arranged at the first set of regularly spaced openings, arranged for introducing a swirl movement of an incoming exhaust flow in the first longitudinal tube portion. In such configurations, the openings of the first set of regularly spaced openings are preferably parallel rectangular slots having a longitudinal direction parallel with the tube axis. The band or ribbon defined by the slots then preferably comprises a single column of these parallel slots. According to preferred embodiments, the louvers arranged adjacent to the slots of the first longitudinal tube portion make an angle with an outside surface of the mixing tube within the range of 20° to 40°, for instance an angle of about 30°.

According to preferred embodiments, the second longitudinal tube portion comprises a second set of regularly spaced openings, preferably rectangular slots having a longitudinal direction oriented parallel to the tube axis in a region adjacent to the first longitudinal portion. In case the first longitudinal tube section comprises slots, the slots of the second longitudinal tube portion are preferably longer by at least 100%, or by at least 200%, or by at least 300%. A band or ribbon defined by the openings or slots preferably comprises a single column of these parallel slots.

According to preferred embodiments, the density of the openings or slots within the area that they define, e.g. within a band or ribbon arranged around and perpendicularly on the mixing tube axis, is within the range of 25% to 40%, more preferably within 30% to 36%. According to preferred embodiments, the opening/slot density is about 1/3 or about 33%. According to preferred embodiments, the relative open area of the openings/slots with respect to the cross-section area A is more than 100%. Preferably it is within the range of 100% to 118%, or within the range if 101% to 117%, or within the range of 104% to 114% of the cross-section area A. According to preferred embodiments, the relative open area is about 109%.

According to preferred embodiments, the mixing tube further comprises louvers arranged adjacent to the openings or slots of the second set of regularly spaced openings in the second longitudinal tube portion, which are suitable for inducing a swirl movement in the mixing tube for a exhaust gas flow passing through the slots into the mixing tube.

According to preferred embodiments, the first set of louvers and the louvers arranged adjacent to the slots of the second longitudinal tube portion are introducing swirl in the same direction, for instance around the mixing tube axis.

According to preferred embodiments, the first set of louvers and the louvers arranged adjacent to the slots of the second longitudinal tube portion are introducing swirl in the opposite direction, for instance around the mixing tube axis.

According to preferred embodiments, the louvers arranged adjacent to the slots make an angle of with an outside surface of the mixing tube within the range of 20° to 40°, for instance an angle of about 30°.

According to preferred embodiments, an angular separation between two regularly spaced adjacent slots is smaller than 20°, and the regularly angularly spaced slots extend over a angular interval of at least 100°, preferably at least 150°.

According to preferred embodiments, the second longitudinal portion comprises at least one angular portion that does not comprise slots, the angular portion extending over at least 30°, in the region adjacent to the first longitudinal tube portion.

According to preferred embodiments, the second longitudinal portion comprises two such angular portions that do not comprise slots, being arranged at opposite sides of the mixing tube, in the region adjacent to the first longitudinal tube portion.

According to preferred embodiments, the second longitudinal tube portion comprises a third set of regularly spaced openings axially in between the second set of regularly spaced openings and the second end of the mixing tube. It is an advantage of the third set of openings that deposit formation can be reduced or prevented in the respective mixing tube area. This is due to for instance the following effects. A first effect is the increase of the total spray impact area, i.e. the surface area of the mixing tube in the area where deposits would typically form, resulting in a relatively larger (heated) spray impact area and increased heat transfer from the exhaust gas flow to the mixing tube, which reduces/jeopardises deposit formation and provides a higher probability for re-evaporation. A second effect is due to the exhaust gas flow being inwardly oriented when entering the mixing tube through the third set of regularly spaced openings, pushing at least some urea water solution particles inwardly and decreasing the probability for deposition thereof. A third effect is linked to the use of the mixing tube in a exhaust treatment assembly; when a portion of the exhaust gas flow is bypassing the first and second set of regularly spaced openings and is directed towards the third set of regularly spaced openings, the intermediate tube sidewall portion is heated by the passing of that portion, increasing evaporation probability of any liquid film or solid deposit formed on the inner surface of the intermediate tube sidewall portion. A further effect is that a layer of exhaust gas flow with relatively low urea concentration is created by a portion of the exhaust gas flow entering the mixing tube via the third set of regularly spaced openings in the region adjacent to the inner sidewall, reducing probability of deposit formation. In fact, the boundary layer of exhaust gas flow comprising a high urea concentration is somehow systematically flushed by the incoming portion of the exhaust gas flow entering the mixing tube via the third set of regularly spaced openings.

According to preferred embodiments, the third set of regularly spaced openings forms a circumferential band or ribbon around the mixing tube, surrounding and in a direction perpendicular to the axis of the mixing tube. The openings of the third set of regularly spaced openings are preferably distributed evenly, for instance in a matrix-type configuration. The openings can have different shapes such as circular, elliptical, obround, rectangular or square, but are preferably circular in cross-section. Preferably, the openings have a diameter of less than 4mm, or less than 3mm, or less than 2 mm, or less than 1 mm.

According to preferred embodiments, the density of the openings of the third set of openings within the area that they define (e.g. covering the whole region of the second longitudinal portion of the mixing tube in between the second set of openings and the second end, or within a limited band or ribbon surrounding and perpendicular to the mixing tube axis), is within the range of 3% to 15%, more preferably within 5% to 10%.

According to preferred embodiments, the relative open area of the openings of the third set of openings is within the range of 15% to 29%, more preferably within the range of 19% to 25%, of the cross-section area A. According to preferred embodiments, the relative open area is about 22%.

According to preferred embodiments, the third set of regularly spaced openings extends over whole region of the second longitudinal portion of the mixing tube in between the second set of openings and the second end. The openings are preferably circular in cross-section and arranged in a matrix-type configuration.

According to alternative preferred embodiments, the openings of the third set of regularly spaced openings are arranged adjacent to the second end of the mixing tube, and are preferably elongate in nature. Preferably, an intermediate portion of the mixing tube is present in between the second set of openings/slots and third set of regularly spaced openings, which does not comprise any opening and can have a axial length of more than 5 cm, or of more than 10 cm. The elongate openings are preferably having longitudinal axes that are parallel. Preferably these longitudinal axes are not parallel to the mixing tube axis.

According to preferred embodiments, the mixing tube further comprises an urea water solution injector mount arranged in the first end of the mixing tube for receiving an injector for injecting an urea water solution into the mixing tube along the tube axis. When the mixing tube does not comprise an urea water solution injector mount itself, this can be provided in the exhaust treatment assembly, such as for instance in the housing, adjacent to the first end of the mixing tube. The following discussion on an annular or ring gap area for a mixing tube comprising a injector mount equally applies to the exhaust treatment assembly described later, mutatis mutandis.

According to preferred embodiments, the injector mount defines a planar surface at a distance from the central opening in the flow guide component and the conically shaped surface extends from the central opening to an inner sidewall of the mixing tube, and extends in a direction towards the first end of the mixing tube when following the surface from the inner sidewall radially towards the central opening. Hereby an annular gap surface area is defined as the surface area of a cylindrical surface defined by and in between the central opening and the planar surface, when projecting the central opening on the preferably planar surface. The size of this gap and thus surface area is a measure of how much exhaust gas can flow through the first set of openings and, if a set of cone openings is present, of how the flow entering through the first set of openings is afterwards distributed between the central opening and the set of cone openings.

The relative size of the annular gap area with respect to the diameter of the mixing tube is preferably within the range of 20% to 35%, more preferably between 25% and 30%. This is especially effective in embodiments where the flow guide component comprises a set of regularly spaced cone openings in the conically shaped surface. According to preferred embodiments, the relative size of the annular gap area is about 27%.

According to preferred embodiments, the first, and if present second and third set of regularly spaced openings extend over the following ranges of a length of the mixing tube:
a. First set within 5 to 15 % of the tube length;
b. Second set within an additional 15 to 30% of the tube length;
c. Third set within a still additional 30 to 70% of the tube length.

According to preferred embodiments, the third set of regularly spaced openings is provided in the last 30%, more preferably in the last 20% of the mixing tube length, adjacent to the second end of the mixing tube.

According to preferred embodiments, the opening density of the first set of openings is larger than the opening density of the third set of openings.

According to preferred embodiments, the opening density of the first set of openings is larger than 30% and the opening density of the third set of openings is smaller than 15%.

According to preferred embodiment, the band of preferably regularly spaced cone openings has an axial extent (or width) which is comparable or smaller than the axial extent of the bond of the first set of regularly spaced openings in the mixing tube. Preferably, a radially outward projection of the band of set of cone openings on the inner surface of the mixing tube is fully comprised in the band defined by the first set of regularly spaced openings.

It is a second object of the present disclosure to provide an exhaust treatment assembly comprising a housing with an inlet and an outlet, comprising:
- a mixing tube according to any of the previous embodiments arranged within the housing, in a manner that (preferably all) exhaust gas flowing from the inlet to the outlet needs to enter the mixing tube (preferably through a mantle thereof) and leave the mixing tube through an opening at the second end of the mixing tube;
- an urea water solution injector mount arranged at the first end of the mixing tube (on or in the mixing tube, or in the housing) for receiving an injector for injecting an urea solution into the mixing tube along the tube axis;
wherein the flow guide component is further arranged within the mixing tube such as to separate an injection area from a mixing area of the exhaust treatment assembly.

According to preferred embodiments, wherein the mixing tube comprises the first, second and third set of regularly spaced openings, the housing is further adapted for guiding a first, second and third complementary portion of the exhaust gas flow towards the first and second longitudinal tube portion for entering the mixing tube through the first, second and third set of openings. According to preferred embodiment, the housing and mixing tube are arranged such that, in use, at least a portion of the exhaust gas flow can heat the all or most of (at least 70%, or at least 80% or at least 90% or at least 95% or at least 99%) the outer sidewall of the second longitudinal tube portion before entering the mixing tube.

It is a third object of the present disclosure to provide an exhaust treatment assembly comprising an urea water solution injector and a mixing tube according to any of the embodiments associated with the first object, wherein the injector is arranged at a first end of the mixing tube for injecting an urea solution into the mixing tube along the tube axis, wherein the injector has an intrinsic spray cone envelope, and wherein the mixing tube comprises a first, second and a third set of openings and a set of cone openings, which are arranged and adapted for:
- guiding and confining the spray cone to a central portion of the tube, in the first longitudinal tube portion, preferably by the first set of openings and the set of cone openings;
- introducing a swirl motion of an exhaust flow for mixing with the spray cone, in a first portion of the second longitudinal tube portion, adjacent to the first longitudinal tube portion, preferably by the second set of openings;
- reducing urea water solution deposit in a second portion of the second longitudinal tube portion, in between the second set of regularly spaced openings and the second end of the mixing tube, preferably by the third set of openings.

It is a fourth object of the present disclosure to provide an exhaust treatment assembly comprising a housing with an inlet and an outlet, comprising:
- a mixing tube according to any of the embodiments associated with the first object arranged within the housing, having a first, second and third set of regularly spaced openings, in a manner that (preferably all) exhaust gas flowing from the inlet to the outlet needs to enter the mixing tube (preferably through a mantle thereof) and leave the mixing tube through an opening at the second end of the mixing tube;
- an urea injector mount arranged at the first end of the mixing tube (on or in the mixing tube, or in the housing) for receiving an injector for injecting an urea solution into the mixing tube along the tube axis;
wherein the exhaust treatment assembly is further adapted to guide a first, second and third complementary portion of the exhaust flow towards the first, and if present second and third set of openings for entering the mixing tube.

It has been recognised that mixing tube configurations as described above can also, but to a limited extend, provide a reduction of urea water solution deposits and improved mixing of urea water solution with the exhaust gas flow by dampening any large scale turbulence in the mixing tube near the point of urea water solution injection (in other words near the urea water solution injector), without the use of the flow guide component. Such configurations will be described below.

It is fifth object of the present disclosure to provide a mixing tube for an exhaust treatment assembly, the mixing tube having and extending along a tube axis and having a first end and a second end. According to preferred embodiments, the tube has a constant cross-section. The mixing tube preferably has a cylindrical envelope and comprises a representative cross-section area "A" perpendicular to the tube axis.

The mixing tube comprises a first longitudinal tube portion at the first end, a third longitudinal tube portion at the second end and a second longitudinal tube portion in between the first and the third longitudinal tube portions, wherein the first, second and third longitudinal tube portions comprise a first, a second and a third set of regularly spaced openings having different first, second and third opening densities.

When referring to the description of the first to fourth object of the present disclosure, the "second longitudinal tube portion" has now been split in a second longitudinal tube portion and a third longitudinal tube portion. The first, second and third longitudinal tube portions comprise a first, second and third set of regularly openings respectively.

According to preferred embodiments, the first set of regularly spaced openings forms a circumferential band or ribbon around the mixing tube, in a direction perpendicular on the axis of the mixing tube. The openings of the first set of regularly spaced openings are preferably distributed evenly, for instance in a matrix-type configuration.

The openings can have different shapes such as circular, elliptical, obround, rectangular or square, but are preferably circular in cross-section. Preferably, the openings have a diameter of less than 4mm, or less than 3mm, or less than 2 mm, or less than 1 mm.

According to preferred embodiments, the density of the openings of the first set of openings within the area that they define, e.g. within a band or ribbon, is within the range of 25% to 40%, more preferably within 30% to 36%. According to preferred embodiments, the opening density is about 1/3 or about 33%.

According to preferred embodiments, the relative open area of the openings of the first set of openings is within the range of 6% to 26%, more preferably within the range of 11% to 21%, of the cross-section area A. According to preferred embodiments, the relative open area is about 16%.

According to preferred embodiments, the third set of regularly spaced openings forms a circumferential band or ribbon around the mixing tube, surrounding and in a direction perpendicular to the axis of the mixing tube. The openings of the third set of regularly spaced openings are preferably distributed evenly, for instance in a matrix-type configuration. The openings can have different shapes such as circular, elliptical, obround, rectangular or square, but are preferably circular in cross-section. Preferably, the openings have a diameter of less than 4mm, or less than 3mm, or less than 2 mm, or less than 1 mm.

According to preferred embodiments, the density of the openings of the third set of regularly spaced openings within the area that they define (e.g. covering the whole region of the second longitudinal portion of the mixing tube in between the second set of openings and the second end, or within a limited band or ribbon surrounding and perpendicular to the mixing tube axis), is within the range of 3% to 15%, more preferably within 5% to 10%.

According to preferred embodiments, the relative open area of the openings of the third set of openings is within the range of 15% to 29%, more preferably within the range of 19% to 25%, of the cross-section area A. According to preferred embodiments, the relative open area is about 22%.

According to preferred embodiments, the third set of regularly spaced openings extends over the whole region of the third longitudinal portion of the mixing tube, i.e. in between the second set of regularly spaced openings and the second end. The openings are preferably circular in cross-section and preferably arranged in a matrix-type configuration.

According to alternative preferred embodiments, the openings of the third set of regularly spaced openings are arranged adjacent to the second end of the mixing tube, and are preferably elongate in nature. Preferably, an intermediate portion of the mixing tube is present in between the second set of regularly spaced openings/slots (second longitudinal tube portion) and the third set of regularly spaced openings, which does not comprise any opening and can have a axial length of more than 5 cm, or of more than 10 cm. The elongate openings are preferably having longitudinal axes that are parallel. Preferably these longitudinal axes are not parallel to the mixing tube axis.

The third set of regularly spaced openings can provide one or more of the following effects. A first effect is the effect of increasing the total surface area of the mixing tube in the area where deposits would typically form, resulting in a relatively larger (heated) area, which reduces/jeopardises deposit formation and provides a higher probability for re-evaporation of deposits. A second effect is due to the exhaust gas flow being inwardly oriented when entering the mixing tube through the third set of regularly spaced openings, pushing at least some urea water solution particles inwardly and decreasing the probability for deposition thereof. A third effect is linked to the use of the mixing tube in a exhaust treatment assembly; when a portion of the exhaust gas flow is bypassing the first and second set of regularly spaced openings and is directed towards the third set of regularly spaced openings, the intermediate tube sidewall portion is heated by the passing of that portion, increasing evaporation probability of any deposits formed on the inner surface of the intermediate tube sidewall portion.

According to preferred embodiments, the mixing tube further comprises an urea water solution injector mount arranged in the first end of the mixing tube for receiving an injector for injecting an urea water solution into the mixing tube along the tube axis.

According to preferred embodiments, the opening density of the third set of openings is smaller than the opening density of the first set of openings, in the areas that they define respectively, and the second longitudinal tube portion comprises regularly spaced slots having a longitudinal direction oriented parallel to the tube axis.

According to preferred embodiments, the opening density of the first set of openings is larger than the opening density of the third set of openings.

According to preferred embodiments, the opening density of the first set of openings is larger than 30% and the opening density of the third set of openings is smaller than 15%.

According to preferred embodiments, the second longitudinal tube portion comprises a second set of regularly spaced openings, preferably rectangular slots having a longitudinal direction oriented parallel to the tube axis in a region adjacent to the first longitudinal portion. A band or ribbon defined by the openings or slots preferably comprises a single column of these parallel slots.

According to preferred embodiments, the density of the openings or slots within the area that they define, e.g. within a band or ribbon arranged around and perpendicularly on the mixing tube axis, is within the range of 25% to 40%, more preferably within 30% to 36%. According to preferred embodiments, the opening/slot density is about 1/3 or about 33%. According to preferred embodiments, the relative open area of the openings/slots with respect to the cross-section area A is more than 100%. Preferably it is within the range of 100% to 118%, or within the range if 101% to 117%, or within the range of 104% to 114% of the cross-section area A. According to preferred embodiments, the relative open area is about 109%.

According to preferred embodiments the second longitudinal tube portion comprises swirl inducing means as for instance louvers arranged adjacent to the slots which are suitable for inducing a swirl movement in the mixing tube for an exhaust gas flow passing through the slots into the mixing tube. The induced swirl movement in the mixing tube preferably corresponds to a substantially tangential flow of the exhaust, circulating around the tube axis.

According to preferred embodiments, the louvers make an angle with an outside surface of the mixing tube within the range of 20° to 40°.

According to preferred embodiments, an angular separation between two regularly spaced adjacent slots is smaller than 20°, and wherein the regularly angularly spaced slots extend over an angular interval of at least 100°, preferably at least 150°.

According to preferred embodiments, the second longitudinal tube portion comprises at least one angular portion that does not comprise slots, the angular portion extending over at least 30°.

According to preferred embodiments, the second longitudinal tube portion comprises two angular portions that do not comprise slots, being arranged at opposite sides of the mixing tube.

According to preferred embodiments, a wall thickness of the mixing tube, e.g. also the third longitudinal tube portion, is larger than 1.0mm, or larger than 2mm, and a diameter of the openings/perforations is smaller than 4mm. Preferably, the openings have a diameter of less than 4mm, or less than 3mm, or less than 2 mm, or less than 1 mm.

According to preferred embodiments, the opening density of the third longitudinal tube portion lies within the range of 3 to 15%.

According to preferred embodiments, the mixing tube further comprises a means for mounting an urea water solution injector at the first end, such as an injector mount.

According to preferred embodiments, the first, second and third set of regularly spaced openings extend over the following ranges of a length of the mixing tube:
d. First set within 5 to 15 % of the tube length;
e. Second set within an additional 15 to 30% of the tube length;
f. Third set within a still additional 30 to 70% of the tube length.

According to preferred embodiments, the third set of regularly spaced openings is provided in the last 30%, more preferably in the last 20% of the mixing tube length, adjacent to the second end of the mixing tube.

According to preferred embodiments, the mixing tube further comprises a flow guide component arranged within the mixing tube such as to separate an injection area from a mixing area in the mixing tube, the flow guide component having a conically shaped surface defining a central opening, the conically shaped surface adapted and arranged for guiding an exhaust flow towards and through the opening. The flow guide component can be as described in any of the embodiments of the first object of the present disclosure.

It is a sixth object of the present disclosure to provide a set of an urea water solution injector and a mixing tube according to any of the embodiments associated with the fifth object, wherein the injector is arranged at a first end of the mixing tube for injecting an urea solution into the mixing tube along the tube axis, wherein the injector has an intrinsic spray cone envelope, and wherein the first, second and third set of openings are arranged and adapted for respectively:
- confining the spray cone to a central portion of the tube, in the first longitudinal tube portion;
- introducing a swirl motion of an exhaust flow for mixing with the spray cone, in the second longitudinal tube portion;
- reducing urea water solution deposit in the third longitudinal tube portion.

It is a seventh object of the present disclosure to provide an exhaust treatment assembly comprising a housing with an inlet and an outlet, comprising:
- a mixing tube according to any of the embodiments associated with the fifth object arranged within the housing, in a manner that (preferably all) exhaust gas flowing from the inlet to the outlet needs to enter the mixing tube (preferably through a mantle thereof) and leave the mixing tube through an opening at the second end of the mixing tube;
- an urea injector mount arranged at the first end of the mixing tube (on or in the mixing tube, or in the housing) for receiving an injector for injecting an urea solution into the mixing tube along the tube axis;
wherein the exhaust treatment assembly is further adapted to guide a first, second and third complementary portion of the exhaust flow towards the first, second and third longitudinal tube portion for entering the mixing tube through the first, second and third set of openings.

According to preferred embodiments, the housing is further adapted for guiding a first, second and third complementary portion of (preferably all) exhaust gas flow towards the first, second and third longitudinal tube portion for entering the mixing tube through the first, second and third set of openings. According to preferred embodiment, the housing and mixing tube are arranged such that, in use, at least a portion of the exhaust gas flow can heat the all or most of (at least 70%, or at least 80% or at least 90%) the outer sidewall of the second and third longitudinal tube portion before entering the mixing tube.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief description of the drawings

The accompanying drawings, which are incorporated in and constitute a part of the description, illustrate several aspects of the present disclosure. A brief description of the drawings is as follows:
FIG. 1 is a perspective view of a dosing and mixing assembly according to the prior art.
FIG. 2 is perspective view of another dosing and mixing assembly according to the prior art.
Fig. 3 illustrates a first preferred embodiment of the first object of the present disclosure.
Fig. 4 (a) to (c) illustrate details of Fig. 3 showing details of a flow guide component according to preferred embodiments of the present disclosure.
Fig. 5 illustrates simulation data of a exhaust gas flow within a mixing tube according to the preferred embodiment illustrated in Fig. 3 and Fig. 4(a) to 4(c).
Fig. 6 illustrates an exhaust gas treatment system including a mixing tube similar to the embodiment illustrated in Fig. 3.
Fig. 7 illustrates second preferred embodiment of the first object of the present disclosure.
Fig. 8 shows simulation data of movement of urea water solution droplets in a preferred embodiment of an exhaust gas treatment assembly comprising a mixer tube according to the second preferred embodiment of the present disclosure and the distribution of the deposit of urea water solution in the mixing tube.
Fig. 9 illustrates a third preferred embodiment of the first object of the present disclosure.
Fig. 10 illustrates a first preferred embodiment of the fifth object of the present disclosure.
Fig. 11 illustrates a preferred arrangements of louvers for introducing swirl in the mixing tubes according to embodiments of the present disclosure.

### Detailed Description

Reference will now be made in detail to exemplary aspects of the present disclosure that are illustrated in the accompanying drawings. Wherever possible, the same reference numbers will be used throughout the drawings to refer to the same or like parts.

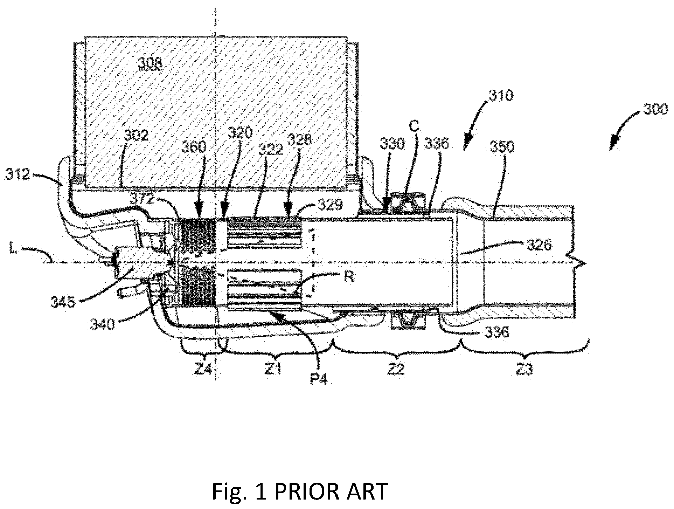

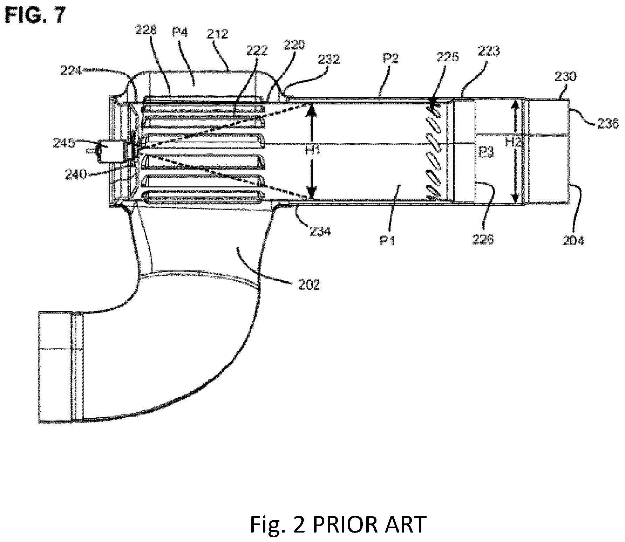

Fig.1 and Fig.2 illustrate prior art disclosures of WO2021050157A1, which can be improved by embodiments of the present disclosure.

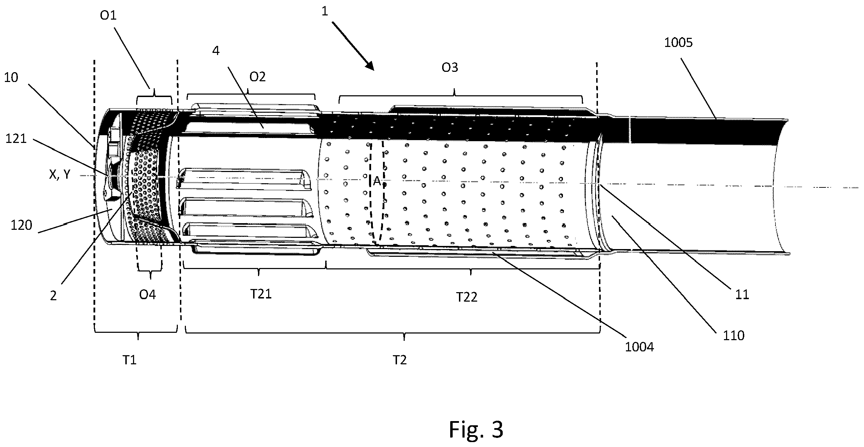

Fig. 3 illustrates a first preferred embodiment of the first object of the present disclosure. A mixing tube 1 is disclosed for an exhaust treatment assembly 1000. The mixing tube 1 extends along a tube axis X and has a first end 10 and a second end 11. It has a constant cross-section area A, perpendicular to the tube axis X.

The mixing tube comprising a first longitudinal tube portion T1 at the first end 10 and a second longitudinal tube portion T2 in between the first longitudinal tube portion T1 and the second end 11. The first longitudinal tube portion T1 comprises a first set of regularly spaced openings O1 for allowing an exhaust flow to enter the mixing tube. The openings or perforations of the first set of regularly spaced openings O1 are distributed evenly and arranged in a matrix-type configuration, arranged in a band or ribbon arranged perpendicular to and surrounding the mixing tube axis X. These openings or perforations are round in cross-section and have a diameter of about 3mm. The density of the openings of the first set of openings within the area that they define, e.g. within the band or ribbon, is about 1/3 or about 33%. The relative open area of the openings of the first set of openings is about 16% of the cross-section area A.

The first longitudinal tube portion T1 and the second longitudinal tube portion T2 are separated from one another by a flow guide component 2 arranged within the mixing tube 1 such as to separate an injection area from a mixing area in the mixing tube 1.

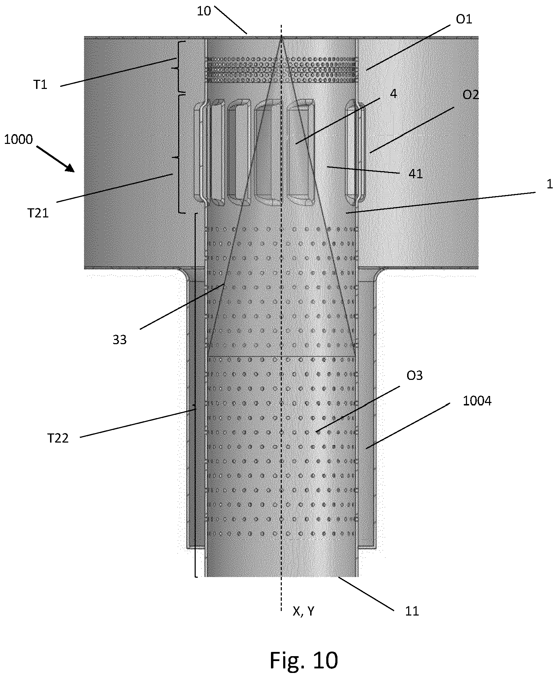

The second longitudinal tube portion T2 can further be divided a first portion T21 adjacent to the first longitudinal portion and a second portion T22 in between the first portion T21 and the second end 11 of the mixing tube. These portions are described as second longitudinal portion T21 and third longitudinal portion T22 in relation with embodiments described in relation with Fig. 10.

The mixing tube 1 further comprises an urea water solution injector mount 120 arranged at or in the first end 10, axially positioned in between the first end 10 and the band comprising the first set of regularly spaced openings O1. The injector mount 120 comprises a metal plate which basically closes off the first end 10 of the mixing tube 1 and which comprises an opening 121 through which the injector is able to extend and/or inject the water urea solution in the form of a spray cone 33.

The second longitudinal tube portion T2 comprises a second set of regularly spaced openings O2, here a set of regularly spaced slots O2 having a longitudinal direction oriented parallel to the tube axis X , in a region T21 adjacent to the first longitudinal portion T1. It further comprises louvers 4 arranged adjacent to the slots which are suitable for inducing a swirl movement in the mixing tube 1. A band or ribbon arranged around and perpendicularly on the mixing tube axis X, defined by the openings or slots comprises a single column of these parallel slots. The density of the openings or slots within the area that they define, i.e. within the band or ribbon, is about 1/3 or about 33%. The relative open area of the openings/slots with respect to the cross-section area A is advantageously more than 100%, in this case about 109%.

The second longitudinal tube portion T2 further comprises a third set of regularly spaced openings O3 positioned axially in between the second set of regularly spaced openings O2 and the second end 11 of the mixing tube 1. The openings of the third set of regularly spaced openings O3 are distributed evenly and arranged in a matrix-type configuration, arranged in a band or ribbon arranged perpendicular to and surrounding the mixing tube axis X. These openings or perforations are round in cross-section and have a diameter of about 3mm. The band or ribbon with regularly spaced opening O3 extends axially from the second end 11 of the mixing tube until the band defined by the second set of regularly spaced slots O2 with louvers. The density of the openings of the third set of openings, i.e the relative open area, within the area that they define (i.e. covering the whole region of the second longitudinal portion of the mixing tube in between the second set of openings and the second end), is preferably between 5% and 33%. The relative open area of the openings of the third set of openings is preferably about 22%.

An example of a further tube component 1005 of the exhaust treatment assembly 1000 is depicted. The tube component has an longitudinal axis which is common with the axis X of the mixing tube. It comprises a first longitudinal portion which forms a continuation of the mixing tube in a direction away from the mixing tube 1 and away from the second end, which has a diameter about equal or equal to the diameter of the mixing tube, and a second longitudinal portion of slightly larger diameter that surrounds a tube end portion of the mixing tube near its second end 11, to thereby provide an annular cavity or bypass 1004 around the mixing tube 1 for guiding exhaust gas towards at least a portion of the third set of regularly spaced openings O3 of the mixing tube 1. It will be recognised by the skilled person that other housing configurations can be provided in the exhaust assembly 1000 to provide a similar effect.

The flow guide component has a rotational symmetry along an axis Y, which coincides with mixing tube axis X. The flow guide component 2 comprises a conically shaped surface 21 defining a central opening 20. It is adapted and arranged for guiding an exhaust flow entering the mixing tube through the first set of regularly spaced openings O1 towards and through the central opening 20. The conically shaped surface 21 extends from the central opening 20 to an inner sidewall 13 of the mixing tube 1, and extends in a direction towards the first end 10 of the mixing tube when following the surface 20 from the inner sidewall 13 radially towards the central opening 20 (in other words pointing towards the first end 10 of the mixing tube 1).

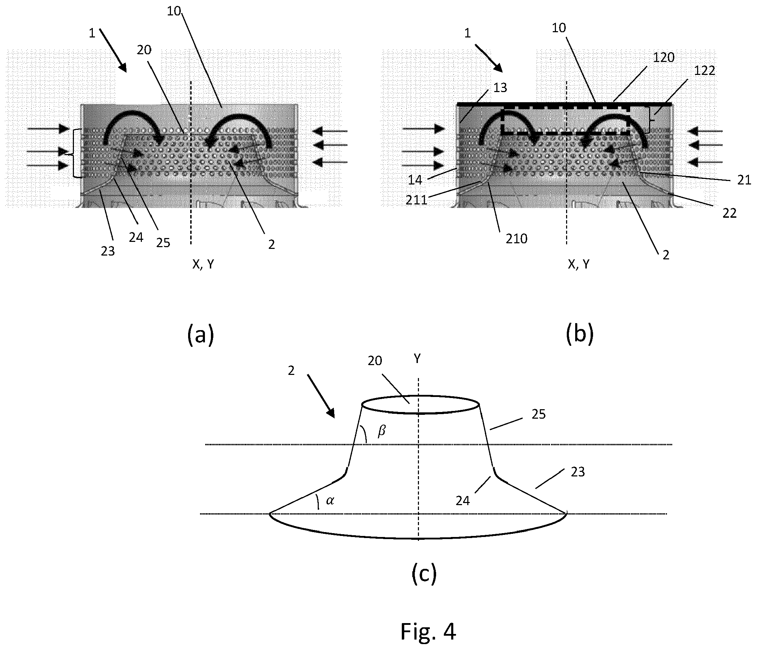

A radial cross-section of the flow guide component is illustrated for instance in Fig. 4 (c) and comprises a first substantially straight section 23 forming a first angle α (within the range of 15° to 45°) with a plane perpendicular to the flow guide axis Y, a different second substantially straight section 25 forming a second angle β (within the range of 45° to 90°) with the plane perpendicular to the flow guide axis Y, and a connection section 24 connecting the first substantially straight section 23 and the second substantially straight section 25, the first substantially straight section 23 being arranged in between the internal sidewall 13 of the mixing tube 1 and the connection section 24, and the second substantially straight section 25 being arranged in between the connection 24 section and the central opening 20.

An inner annular portion of the flow guide component can be associated with the second substantially straight section 25, and an outer annular portion of the flow guide component can be associated with the first substantially straight section 23.

The flow guide component 2 comprises a set of regularly spaced cone openings O4 in the conically shaped surface 21, preferably in the second straight section 25 thereof, to thereby provide a first and a second flow path for exhaust flow entering the mixing tube through the first set of regularly spaced openings O1; a first flow path going through the central opening 20 and second flow path going through the set of regularly spaced cone openings O4. The flow guide component is illustrated in more detail in Fig. 4(c). The positioning and flow direction of the exhaust gas is illustrated in more detail in Fig. 4(a) and Fig. 4(b).

The openings of the set of regularly spaced cone openings O4 are distributed evenly and arranged in a matrix-type configuration, arranged in a band or ribbon arranged perpendicular to and surrounding the mixing tube axis X, in the inner annular portion of the flow guide component associated with the second substantially straight section 25. These openings or perforations are round in cross-section and have a diameter of about 3mm. The set of cone openings O4 has a opening density of about 33% within the band that it defines. The total accumulated surface size of the set of cone openings O4 is about 22% of the cross-section area A.

The central opening 20 has a surface size of about 37% of the cross-section area A.

A axially extending gap is present in between the water urea solution injector mount 120 and the opening 20 of the flow guide component 2. It was found that the annular surface of a cylinder defined by projecting the opening 20 on the injector mount 120, more specifically on the lower surface, here flat surface of the injector mount plate, is a parameter which determines the distribution of exhaust gas flow over the central opening 20 and the set of regularly spaced cone openings O4. This annular gap area 122 is about 27% of the cross-section area A.

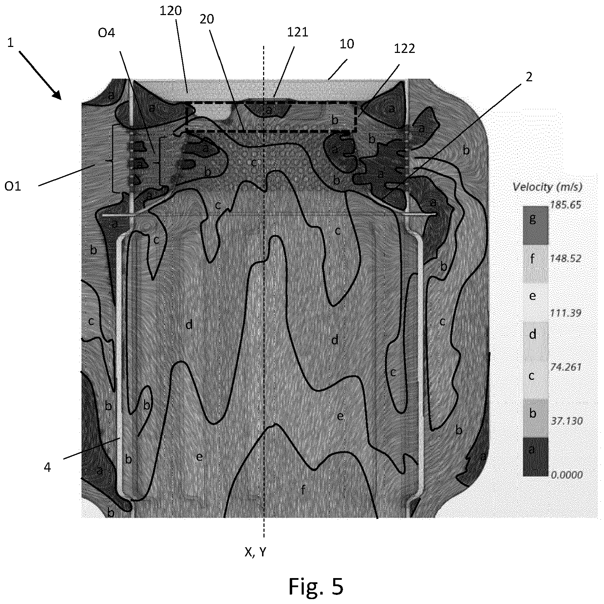

Fig. 5 illustrates computational fluid dynamics simulation data of a exhaust gas flow within a mixing tube according to the preferred embodiment illustrated in Fig. 3 and Fig. 4(a) to 4(c). The velocity of the exhaust gas flow in different areas of the mixing device is represented by letter codes. It can be seen that the velocity of the exhaust gas increases when the flow passes radially through the first set of regularly spaced openings O1. The same applies when the flow passes radially through the set of cone openings O4. This helps in guiding the flow in a predetermined manner, e.g. pushing it towards the tube axis, and avoiding or dampening any large scale turbulence in the mixing tube near the point of urea water solution injection (in other words near the urea water solution injector). Due to the relatively small size of the openings, turbulence of a larger scale than these openings tend to be broken up into turbulence of smaller scale.

The local (accelerated) flow provided by the set of , preferably regularly spaced, cone openings O4 in the conically shaped surface 23, 24, 25; or 25 of the flow guide component 2 provides the advantage that it reduces any liquid deposit that may form on the flow guide component, and that it provides an increased probability of re-evaporation of any formed deposits by the increased surface area.

Once the exhaust gas flow has passed axially through the flow guide component, its speed systematically increases in the second longitudinal tube portion T2, T21 while moving towards the second end of the mixing tube. In the second longitudinal tube portion T2, T21 it is subject to swirl induction by a set of louvers 4 adjacent to the second set of regularly spaced openings O2.

The flow provided by this mixing device allows for a better control of injection and mixing, and in general of the dynamic (re)shaping of the water urea spray cone 33 provided by the injector. The presence of the third set of regularly spaced openings O3 in between the second set of regularly spaced openings O2 and the second end 11 of the mixing tube has shown to provide a further symbiotic improvement of the general mixing and deposit formation properties of the mixing tube 1.

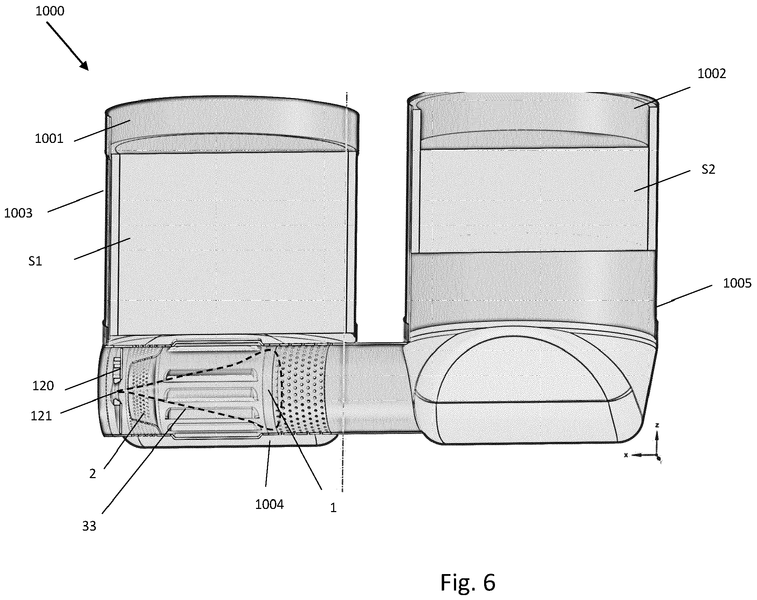

Fig. 6 illustrates an exhaust gas treatment system or assembly 1000 including a mixing tube 1 similar to the embodiment illustrated in Fig. 3. The exhaust gas treatment system comprises a generally U-shaped housing comprising an inlet 1001 and an outlet 1002. It is configured such that the inlet and outlet are facing the same direction, by providing the inlet at a first, freestanding end of the first leg 1003 of the U- shape and the outlet at a first, freestanding end of the second leg 1005 of the U-shape. Each of the legs 1003, 1005 are provided as cylindrical tube housing parts. One or both of the legs can comprise one or more exhaust gas treatment substrates (S1, S2); for instance the first leg 1003 can comprise a first treatment substrate S1 and the second leg 1005 can comprise a second treatment substrate S2. The first and second legs 1003, 1005 are arranged such that a flow passing through their respective inlet 1001 or outlet 1002 necessarily has to pass through the respective substrate. Within the basis part of the U-shaped housing, which forms a fluid-tight connection between the second end of the first leg and the second end of the second leg of the "U"-shape, the mixing tube 1 as explained in relation with Fig. 3 has been provided. The exhaust gas treatment system is configured such that all of the exhaust has is fed to the sidewall of the mixing tube 1 after passing the first leg. The mixing tube comprises a first, second and third set of regularly spaced openings O1, O2 O3 as described before, through which different complementary portions of the exhaust gas flows enter the mixing tube 1. The housing comprises a bypass portion 1004 surrounding the mixing tube such that the exhaust gas flow can be fed in a 360° angular region around the mixing tube axis X.

An injector mount is provided in the mixing tube first end 10. An injector opening 121 is provided in the injector mount 120. A conically shaped flow guide component 2 is arranged in a first end of the mixing tube 1, and comprises a set of regularly spaced cone openings O4. The system typically comprise an urea water solution injector for injecting an urea solution into the mixing tube 1 along the tube axis, wherein the injector has an intrinsic spray cone 33 shape and distribution.

The first set of openings O1 and the set of cone openings O4 are adapted and arranged for guiding and confining the spray cone 33 to a central portion of the tube 1, in the first longitudinal tube portion T1. The second set of openings O2 is adapted and arranged for introducing a swirl motion of the exhaust flow for mixing with the urea water solution of the spray cone 33 in a first portion T21 of the second longitudinal tube portion T2, adjacent to the first longitudinal tube portion T1. The third set of openings O3 is adapted and arranged for reducing urea water solution deposit in a second portion T22 of the second longitudinal tube portion T2, in between the second set of regularly spaced openings O2 and the second end 11 of the mixing tube 1.

All of the exhaust gas flow entering the system 1000 though the inlet 1001 is forced to flow through the first leg 1003 and enter the mixing tube 1 through the first, second and third set of regularly spaced openings O1, O2 O3. The gas flow which is recombined in the mixing tube 1 is then leaving the mixing tube 1 at the second end 11 thereof, after which it is fed into the second leg 1005. The flow passes thought the second substrate S2 in the second leg 1005 and leave the second leg 1005 via the outlet 1002.

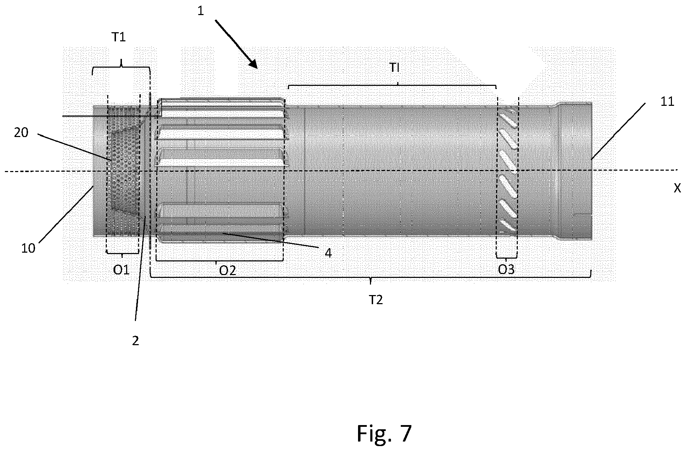

Fig. 7 illustrates a second preferred embodiment of the first object of the present disclosure. This embodiment is similar to the first preferred embodiment of the first object, but is different in that the third set of regularly spaced openings O3 is embodied as a single column of elongate slots having longitudinal axes that are parallel to one another, but which are not parallel to the tube axis X. The third set of regularly spaced openings O3 is arranged near the second end 11 of the mixing tube. In between the second set of regularly spaced openings O2 and the third set of regularly spaced openings O3, an intermediate tube portion TI is provided without openings.

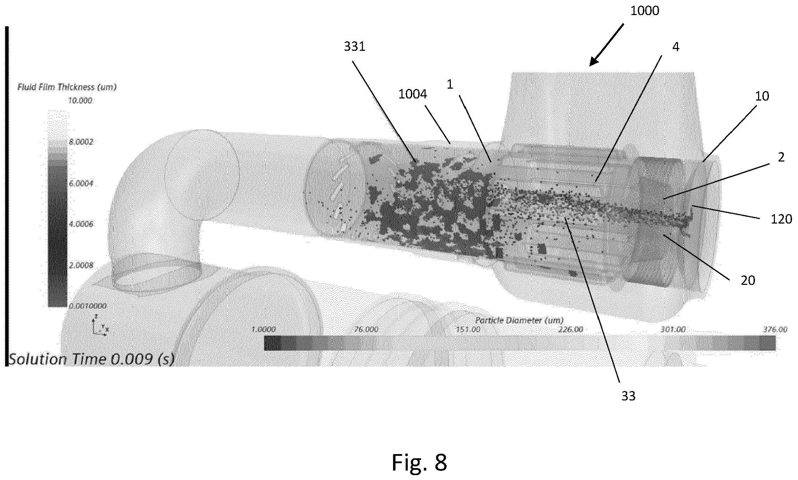

Fig. 8 shows simulation data of movement of urea water solution droplets of the urea water solution cone 33 in a preferred embodiment of an exhaust gas treatment assembly 1000 comprising a mixing tube 1 according to the second preferred embodiment of the present disclosure and the distribution of the deposit 331 of urea water solution in the mixing tube 1. It can be seen that the spray cone 33 remains relatively close to the central axis X in the first longitudinal portion T1 of the mixing tube 1, which is due to the configuration of the flow guide component and first set of regularly spaced openings O1. The presence of a bypass portion 1004 of the housing which allows a portion of the hot exhaust gas to exchange heat with the end portion of the mixing tube (in between the second set of regularly spaced openings O2 and the third set of regularly spaced openings) further contributes to the very low deposit formation in this end portion.

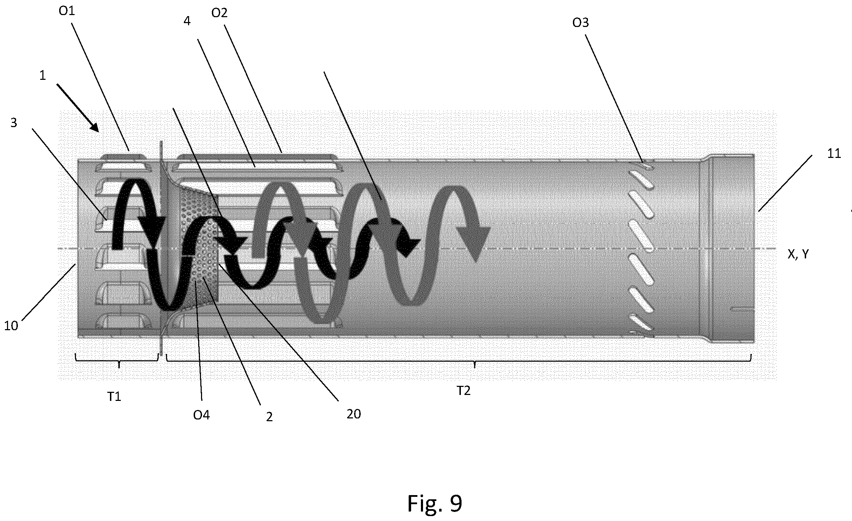

Fig. 9 illustrates third preferred embodiment of the first object of the present disclosure.

This embodiment is similar to the second preferred embodiment of the first object, but is different in the following aspects. The first longitudinal portion T1 of the mixing tube 1 comprises a single column of regularly spaced openings O1, which are elongate, preferably rectangular in nature, having a longitudinal axis parallel to the axis X of the mixing tube. Adjacent to the openings of the first set of openings O1, louvers 3 are provided, arranged for inducing a controlled swirl in the exhaust flow near an injection mount 120 (not depicted). A flow guide component 2 is provided in the mixing tube, separating the injection area from the mixing area. The flow guide component as such has characteristics as described for the first and second preferred embodiment of the first object, but is arranged such that it points towards the second end 11 of the mixing tube 1. The conically shaped surface 21 extends from the central opening 20 to an inner sidewall 13 of the mixing tube 1, and extends in a direction away from the first end 10 of the mixing tube when following the surface 21 from the inner sidewall 13 radially towards the central opening 20. In this case, a radially outward projection of the band of set of cone openings O4 on the inner surface of the mixing tube 1 is fully comprised in the band defined by the second set of regularly spaced openings O2. The combination of the first set of regularly spaced openings O1 and associated louvers 3, and the flow guiding component 2 comprising a, preferably regularly spaced, set of cone openings O4, causes the exhaust flow which enters the first longitudinal portion T1 through the first set of regularly spaced openings O1 to swirl close to the centre of the mixing tube 1, around the axis X of the mixing tube 1. The second set of regularly spaced openings O2 and associated set of louvers 4 is similar as described for the first and second preferred embodiments, and induces a larger swirling and efficient mixing movement of the exhaust gas flow in the second longitudinal tube portion T2. Both sets of louvers 3 and 4 are arranged for introducing swirl in the same rotation direction. The mixing tube further comprises a third set of regularly spaced openings O3 near the second end 11 of the tube 1 as described for the second preferred embodiment of the first object.

Fig. 10 illustrates a first preferred embodiment of the fifth object of the present disclosure, which corresponds to the embodiment explained in relation to Fig. 3, except that there is no flow guide component 2.

The mixing tube 1 comprises a first longitudinal tube portion T1 at the first end 10, a third longitudinal tube portion T22 at the second end 11 and a second longitudinal tube portion T21 in between the first and the third longitudinal tube portions T1,T22, wherein the first, second and third longitudinal tube portions comprise a first, a second and a third set of regularly spaced openings O1, O2 and O3 having different first, second and third opening densities. The exhaust treatment system 1000 further comprises a housing that comprises a bypass portion 1004 as explained before.

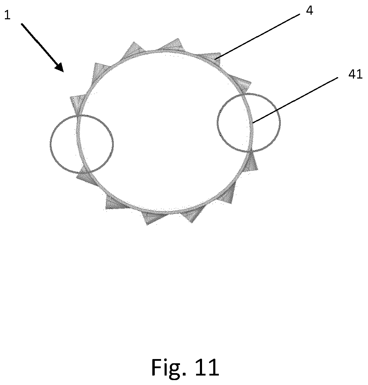

Fig. 11 illustrates preferred arrangements of louvers 4 for introducing swirl in the mixing tubes 1 according to embodiments of the present disclosure, in a cross-section view. According to preferred embodiments, the mixing tube comprises louvers arranged adjacent to the openings or slots of the second set of regularly spaced openings O2 in the second longitudinal tube portion T2, T21, which are suitable for inducing a swirl movement in the mixing tube for a exhaust gas flow passing through the slots into the mixing tube. The angular separation between two regularly spaced adjacent slots is smaller than 20°, and the regularly angularly spaced slots extend over a angular interval of at least 100°, preferably at least 150°. According to preferred embodiments, and possibly in use for any of the disclosed embodiments, the second longitudinal portion comprises at least one angular portion 41 that does not comprise slots, the angular portion extending over at least 30°. The second set or regularly spaced openings O2 can comprise two such angular portions 41 that do not comprise slots, being arranged at opposite sides of the mixing tube 1.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A mixing tube (1) for an exhaust treatment assembly (1000), the mixing tube (1) extending along a tube axis (X) and having a first end (10) and a second end (11) and a representative cross-section area A perpendicular to the tube axis; the mixing tube comprising a first longitudinal tube portion (T1) at said first end (10) and a second longitudinal tube portion (T2) in between said first longitudinal tube portion (T1) and said second end (11); wherein said first longitudinal tube portion (T1) comprises a first set of regularly spaced openings (O1) for allowing an exhaust flow to enter said mixing tube and wherein said first longitudinal tube portion (T1) and said second longitudinal tube portion (T2) are separated from one another by a flow guide component (2) arranged within said mixing tube (1) such as to separate an injection area from a mixing area in said mixing tube (1).

2. A mixing tube according to claim 1, wherein said flow guide component (2) comprises a conically shaped surface (21) defining a central opening (20), said conically shaped surface (21) adapted and arranged for guiding an exhaust flow towards and through said central opening.

3. A mixing tube according to claim 1 or 2, wherein said flow guide component has a rotational symmetry along an axis (Y), and wherein said flow guide component is arranged such that said flow guide component's axis (Y) and said mixing tube axis (X) coincide.

4. A mixing tube according to any of the previous claims, wherein said flow guide component (2) comprises a set of, preferably regularly spaced, cone openings (O4) in said conically shaped surface (21), to thereby provide a first and a second flow path for said exhaust flow entering said mixing tube through said first set of openings (O1), a first flow path going through said central opening (20) and second flow path going through said set of cone openings (O4).

5. A mixing tube according to claim 4, wherein said set of cone openings (O4) has a opening density within the range of 25 to 40%.

6. A mixing tube according to claim 4 or 5, wherein said set of cone openings (O4) has a total accumulated surface size within the range of 12% to 32% of the cross-section area A.

7. A mixing tube according to any of the previous claims, wherein said central opening (20) has a surface size within the range of 0.25 to 0.50 of the cross-section area A.

8. A mixing tube according to any of the previous claims, wherein a radial cross-section of the flow guide component comprises a first substantially straight section (23) forming a first angle *α* with a plane perpendicular to the flow guide axis Y, a different second substantially straight section (25) forming a second angle *β* with the plane perpendicular to the flow guide axis Y, and a connection section (24) connecting the first substantially straight section (23) and the second substantially straight section (25), said first substantially straight section (23) being arranged in between the internal sidewall (13) of the mixing tube (1) and the connection section (24), and said second substantially straight section (25) being arranged in between the connection (24) section and the central opening (20).

9. A mixing tube according to claim 8, wherein said first angle *α* is within the range of 10° to 50°, and said second angle *β* is within the range of 45° to 85°.

10. A mixing tube according to any of claims 2 to 9, wherein said conically shaped surface (21) extends from said central opening (20) to an inner sidewall (13) of said mixing tube (1), and extends in a direction towards said first end (10) of said mixing tube when following said surface (20) from said inner sidewall (13) radially towards said central opening (20).

11. A mixing tube according to claim 2 or 9, wherein said conically shaped surface (21) extends from said central opening (20) to an inner sidewall (13) of said mixing tube (1), and extends in a direction away from said first end (10) of said mixing tube when following said surface (21) from said inner sidewall (13) radially towards said central opening (20).

12. A mixing tube according to any of the previous claims, wherein said second longitudinal tube portion (T2) comprises regularly spaced slots (O2) having a longitudinal direction oriented parallel to the tube axis in a region adjacent to said first longitudinal portion (T1) and further preferably comprises louvers (4) arranged adjacent to said slots which are suitable for inducing a swirl movement in said mixing tube (1) for an exhaust gas flow passing through said slots into said mixing tube (1).

13. A mixing tube according to any of the previous claims, wherein said second longitudinal tube portion (T2) comprises a third set of regularly spaced openings (O3) axially in between the second set of regularly spaced openings (O2) and the second end (11) of said mixing tube (1).

14. A mixing tube according to any of the previous claims, further comprising an urea water solution injector mount (120) arranged in the first end of the mixing tube (1) for receiving an injector for injecting an urea water solution into the mixing tube (1) along the tube axis (X).

15. A exhaust treatment assembly comprising an urea water solution injector and a mixing tube (1) according to any of claims 1 to 14, wherein the injector is arranged at a first end (10) of the mixing tube for injecting an urea water solution into the mixing tube along the tube axis (X), wherein the injector has an intrinsic spray cone envelope (33), and wherein the mixing tube (1) comprises a first, second and a third set of regularly spaced openings (O1, O2, O3) and a set of regularly spaced cone openings (O4), which are arranged and adapted for:
- guiding and confining the spray cone (33) to a central portion of the mixing tube (1), in the first longitudinal tube portion (T1), preferably by the first set of regularly spaced openings (O1) and the set of regularly spaced cone openings (O4);
- introducing a swirl motion of an exhaust flow for mixing with the spray cone (33), in a first portion(T21) of said the second longitudinal tube portion (T2), adjacent to said first longitudinal tube portion (T1), preferably by the second set of regularly spaced openings (O2);
- reducing urea water solution deposit in a second portion (T22) of the second longitudinal tube portion (T2), in between said second set of regularly spaced openings (O2) and said second end (11) of said mixing tube, preferably by said third set of openings (O3).
